# EUROPEAN PATENT SPECIFICATION

(11) **EP 2 131 115 B1**
(45) Date of publication and mention of the grant of the patent: **22.03.2017**
(21) Application number: 09161672.2
(22) Date of filing: 02.06.2009
(51) Int. Cl.: F16L 59/18, F16L 59/14, F24F 13/02

(54) **Connecting piece for air conditioning system**
Verbindungsstück für eine Klimaanlage
Pièce de liason pour un système de climatisation

(30) Priority: 02.06.2008 FI 20085534
(43) Date of publication of application: 09.12.2009
(73) Proprietor: Uponor Innovation AB, 73061 Virsbo (SE)
(72) Inventor: Juuti, Rauno, 15550 Nastola (FI)
(74) Representative: Papula Oy

(56) References cited:
- WO-A-01/79744
- WO-A-03/060371
- DE-U1- 20 014 785
- FI-A- 951 688
- US-A- 4 819 972

## Description

### BACKGROUND OF THE INVENTION

The invention relates to a connecting piece for an air conditioning system, the connecting piece being used in connection with an air duct and including a body.

Air ducts in an air conditioning system are insulated, when necessary, either for thermal insulation or for condensation insulation. In that case, in addition to the insulation of air ducts, it will be necessary to insulate the locations of the connecting pieces of the air ducts. Insulation of the locations of the connecting pieces is carried out with extreme care on the construction site using relatively large amounts of insulation material and fixing supplies, such as duct tape, because if the insulation of the connecting pieces is not performed carefully, uninsulated or poorly insulated areas will appear relatively easily in the air conducting system. In particular, when the air conditioning system requires condensation insulation, it is of particular importance to carry out the insulation carefully.

WO 01/79744 discloses an air-conditioning system comprising ducts and connecting pieces. The connecting piece comprises an inner casing and an outer casing and an insulator between them. The insulator is insulating air. At the end of the connecting piece there is a gap for a duct between the inner casing and the outer casing. DE 20014785 discloses a connecting piece and a gap between parts of a body at the end of the connecting piece. The body comprises a first plastic material with dimensional stability and polyolefin material.

### BRIEF DESCRIPTION OF THE INVENTION

It is the object of the present invention to provide a novel connecting piece for an air conditioning system to be used in connection with air ducts.

The connecting piece for the air conditioning system of the invention is characterized in that the connecting piece for the air conditioning system is pre-insulated, whereby on the outside of the body there is arranged an insulation layer and at the end of the connecting piece to be connected to the air duct there is a gap between the insulation layer and the body for the air duct having an insulation and body. At the end of the connecting piece to be connected to the air duct there is a sealing area, in which there are arranged sealing elements and in which the wall of the body is formed thinner such that a recess is produced in the sealing area and the sealing elements are arranged in the recess of the sealing area.

The basic idea of the invention is that the connecting piece for the air conditioning system comprises a body and an insulation layer arranged on the outside of the body such that the connecting piece is pre-insulated prior to delivery to the construction site. Hence, on-site insulation work that is difficult and time-consuming and requires particular carefulness will be avoided. The air conditioning system will be better and more reliably insulated with considerably less effort than before.

The insulation layer may consist of e.g. an insulation sheet that is wrapped around the body of the connecting piece and arranged preferably by thermoforming into a desired shape and attached to the body. Thus, the connecting piece will be simply and reliably provided to have a desired structure.

The basic idea of an embodiment is that at the end of the connecting piece to be connected to an air duct there is provided a gap between an insulation layer and a body, which gap will be large enough to fit the air duct body and the insulation. Particularly advantageously, a tightening ring is arranged at this point. Thus, tight insulation is achieved throughout the air conditioning system, and a relatively difficult joining point between the air duct and the connecting piece will be reliably insulated without a risk of leakage, not even at the joint.

### BRIEF DESCRIPTION OF THE DRAWINGS

In the following the invention will be described in connection with the attached drawing that shows a schematic, cross-sectional side view of a connecting piece in an air conditioning system.

### DETAILED DESCRIPTION OF THE INVENTION

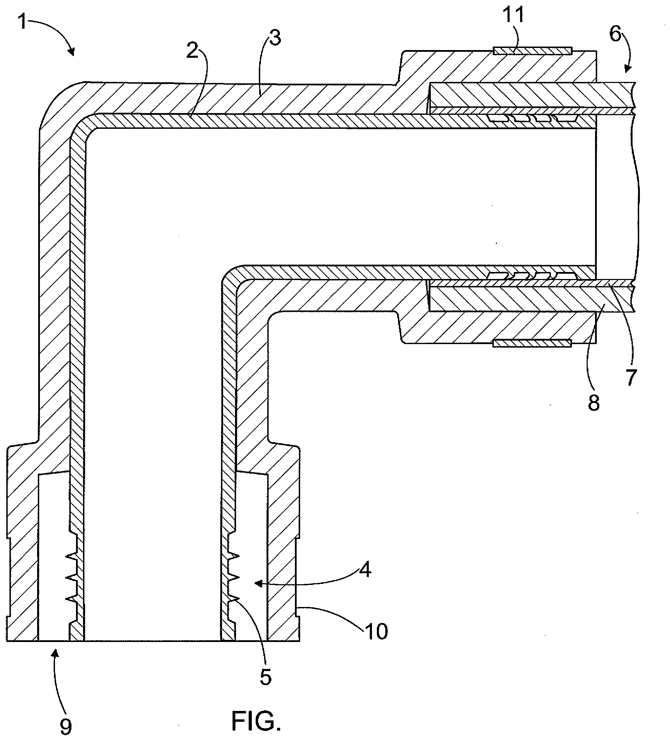

Figure 1 shows a connecting piece 1 intended for an air conditioning system and comprising a body 2 and an insulation layer 3 arranged on the exterior thereof. The body 2 may be made of metal, such as aluminium. Preferably, however, the body is formed of plastic, such as polyethylene PE, cross-linked polyethylene PEX or polypropylene PP.

The insulation layer 3 may be, for instance, closed-cell polyethylene foam. The thickness of a wall in the body 2 may be, for instance, 1 to 5 mm. The thickness of the insulation layer 3 may be, for instance, 5 to 20 mm.

Preferably, at the end or ends of the body 2 that are to be connected to an air duct 6 there is provided a sealing area 4. At the sealing area 4 the wall of the body 2 is formed thinner such that a recession is produced in the sealing area 4. In the recession at the sealing area 4 there are arranged sealing elements 5. The sealing elements 5 may be sealing lips that protrude in the radial direction. The height of the sealing elements 5 is greater than the recession provided in the wall at the sealing area, whereby the top ends of the sealing elements set against the surface of the air duct 6 and seal the body 2 of the connecting piece 1 against the air duct 6.

The sealing elements 5 may be of the same material as the body 2. On the other hand, the sealing elements 5 may also be of softer material, such as thermoplastic elastomer, polyvinyl chloride PVC, polyurethane PUR or some other suitable material. The sealing elements 5 and the body of the connecting piece 2 may be produced to be an integral structure. The body 2 of the connecting piece and the sealing elements 5 may be formed simultaneously by injection moulding, for instance. In case the material of the sealing elements 5 is different from that of the body 2, it is possible to use so-called integral moulding.

The air duct 6 preferably comprises a body 7 and an insulation layer 8. The air duct 6 may be pre-insulated, i.e. the insulation layer 8 may be arranged on the body 7 prior to delivery to the construction site. Further, it is possible to arrange the insulation layer 8 on the body 7 on the construction site. At the ends of the connecting piece 1 of the air conditioning system that are to be connected to the air duct 6 there is provided a gap 9 between the body 2 and the insulation layer 3. The gap 9 is provided such that it will fit both the body 7 of the air duct 6 and the insulation layer 8 thereof.

The gap 9 is thus located between the outer surface of the body 2 and the inner surface of the insulation layer 3, and the gap 9 is utilized in the joining of the air duct 6. The gap 9 is thus provided for the body 7 of the air duct 6 to be connected the connecting piece and the insulation layer 8 thereof, whereby a tight joint will be achieved.

On the outer surface of the insulation layer 3 there are provided grooves 10 for a tightening ring or clamp 11. By means of the groove 10 the tightening ring 11 will be positioned simply and reliably in place. The groove 10 is arranged such that the tightening ring 11 is set at the same location with the sealing elements 5. By means of the tightening ring 11 the insulation layer 3 will be set tightly on the air duct 6. In case the insulation layer 8 is the outermost layer in the air duct 6, the insulation layer 3 of the connecting piece 1 and the insulation layer 8 of the air duct 6 will fit tightly against one another. All in all, thanks to the tightening ring and the mounting point thereof the air duct 6 and the connecting piece 1 will be attached to one another tightly and reliably.

The thickness of the insulation layer 3 and other characteristics affecting the insulation capacity thereof are selected such that the insulation layer 3 as such will be sufficient for a condensation insulation of the connecting piece 1. In case the ducts and connecting pieces in the air conditioning system are to be thermally insulated, it is possible to arrange, for instance, mineral-wool loose material or some other suitable supplementary insulation on the outside thereof.

The insulation layer 3 may be provided on the body 2, for instance, of a sheet consisting of insulation material. This insulation sheet may be thermoformed into a desired shape, whereby the connecting piece becomes neat. In connection with thermoforming the insulation sheet is preferably heated to the extent that the insulation layer 3 adheres to the body 2. The edges of the insulation sheet may be interconnected by gluing or welding, for instance.

In connection with thermoforming, on the outer surface of the insulation layer it is possible to provide markings relating to a connecting piece, such as material, size or other markings to be exploited when the connecting piece is used. In this way the product is rendered easily identifiable, because a marking is found on the insulation, i.e. on the outer surface of the connecting piece 1, and not in a more inconvenient place, such as on the body inside the insulation layer. Because the marking is made during the manufacturing process, erroneous markings will thus be avoided. Preferably the marking is carried out such that the material of the insulation layer is modified, i.e. the material is provided with recesses and/or protrusions that form said marking.

In some cases features presented in this application may be used as such, irrespective of other features. On the other hand, features presented in this application may be combined, when necessary, to provide various combinations.

The drawings and the relating description are only intended to illustrate the inventive idea. The details of the invention may vary within the scope of the claims. Thus, the insulation layer 3 may be attached to the body 2 of the connecting piece 1 by gluing, for instance. The connecting piece 1 may be, for instance, an elbow piece, as shown in the attached figure, or a T-branch, a straight connecting piece or some other connecting piece to be used in connection with the air duct 6.

## Claims

1. A connecting piece for an air conditioning system, the connecting piece (1) being used in connection with an air duct (6), including a body (2) and being pre-insulated, whereby on the outside of the body (2) there is arranged an insulation layer (3), and at the end of the connecting piece (1) there is a gap (9) for the air duct (6), **characterized in that** at the end of the connecting piece (1) to be connected to the air duct (6) there is a gap (9) between the insulation layer (3) and the body (2) for the air duct (6) having a body (7) and an insulation (8) and there is a sealing area (4), in which there are arranged sealing elements (5) and in which the wall of the body (2) is formed thinner such that a recess is produced in the sealing area and the sealing elements (5) are arranged in the recess of the sealing area.

2. The connecting piece for the air conditioning system of claim 1, **characterized in that** the insulation layer (3) is formed of an insulation sheet that is wrapped around the body (2) of the connecting piece.

3. The connecting piece for the air conditioning system of claim 2, **characterized in that** the insulation sheet is formed around the body (2) by thermoforming.

4. The connecting piece for the air conditioning system of claim 3, **characterized in that** the insulation layer is attached to the body (2) by heating the insulation layer (3).

5. The connecting piece of any one of claims 1 to 3, **characterized in that** the insulation layer (3) is attached to the body (2) by gluing.

6. The connecting piece of any one of the preceding claims, **characterized in that** the sealing elements are sealing lips that protrude in the radial direction.

7. The connecting piece of any one of the preceding claims, **characterized in that** the sealing elements (5) are formed to be an integral structure with the body (2).

8. The connecting piece of any one of the preceding claims, **characterized in that** outside of the gap (9) on the outer surface of the insulation layer (3) there is a groove for a tightening ring (11).

9. The connecting piece of any one of the preceding claims, **characterized in that** in the connecting piece (1) there is provided a marking relating thereto and that said marking is arranged on the outer surface of the insulation layer (3).

## Patentansprüche

1. Verbindungsstück für eine Klimaanlage, wobei das Verbindungsstück (1) zusammen mit einem Luftkanal (6) verwendet wird, einen Körper (2) umfasst und vorisoliert ist, wodurch an der Außenseite des Körpers (2) eine Isolierungsschicht (3) angeordnet ist, und an dem Ende des Verbindungsstücks (1) ein Spalt (9) für den Luftkanal (6) ist, **dadurch gekennzeichnet, dass** an dem Ende des Verbindungsstücks (1), das mit dem Luftkanal (6) verbunden werden soll, ein Spalt (9) zwischen der Isolierungsschicht (3) und dem Körper (2) für den Luftkanal (6) mit einem Körper (7) und einer Isolierung (8) ist und dort ein Dichtungsbereich (4) ist, in welchem Dichtungselemente (5) angeordnet sind und in welchem die Wand des Körpers (2) derart dünner ausgebildet ist, dass eine Ausnehmung in dem Dichtungsbereich erzeugt wird und die Dichtungselemente (5) in der Ausnehmung des Dichtungsbereichs angeordnet sind.

2. Verbindungsstück für die Klimaanlage nach Anspruch 1, **dadurch gekennzeichnet, dass** die Isolierungsschicht (3) aus einem Isolierungsfolie gebildet ist, dass um den Körper (2) des Verbindungsstücks herum gebildet ist.

3. Verbindungsstück für die Klimaanlage nach Anspruch 2, **dadurch gekennzeichnet, dass** das Isolierungsblech um den Körper (2) herum durch Thermoformen gebildet ist.

4. Verbindungsstück für die Klimaanlage nach Anspruch 3, **dadurch gekennzeichnet, dass** die Isolierungsschicht an dem Körper (2) durch Erwärmen der Isolierungsschicht (3) aufgebracht wird.

5. Verbindungsstück nach einem der Ansprüche 1 bis 3, **dadurch gekennzeichnet, dass** die Isolierungsschicht (3) an dem Körper (2) durch Kleben aufgebracht wird.

6. Verbindungsstück nach einem der vorstehenden Ansprüche, **dadurch gekennzeichnet, dass** die Dichtungselemente Dichtungslippen sind, die in der Radialrichtung vorstehen.

7. Verbindungsstück nach einem der vorstehenden Ansprüche, **dadurch gekennzeichnet, dass** die Dichtungselemente (5) ausgebildet sind, um eine einstückige Struktur mit dem Körper (2) zu bilden.

8. Verbindungsstück nach einem der vorstehenden Ansprüche, **dadurch gekennzeichnet, dass** außerhalb des Spalts (9) eine Nut für einen Dichtungsring (11) an der Außenfläche der Isolierungsschicht (3) ist.

9. Verbindungsstück nach einem der vorstehenden Ansprüche, **dadurch gekennzeichnet, dass** in dem Verbindungsstück (1) eine Markierung bezüglich dessen ist und dass diese Markierung an der Außenfläche der Isolierungsschicht (3) angeordnet ist.

## Revendications

1. Pièce de jonction pour un système d'air conditionné, ladite pièce de jonction (1), qui est destinée à être utilisée en liaison avec une conduite d'air (6), comporte un corps (2) et est pré-isolée, une couche d'isolation (3) étant disposée sur la face externe du corps (2) et un espace (9) pour la conduite d'air (6) étant situé à l'extrémité de la pièce de jonction (1), **caractérisée en ce que** pour la conduite d'air (6) un espace (9) est prévu, entre la couche d'isolation (3) et le corps (2), à l'extrémité de la pièce de jonction (1) à raccorder à la conduite d'air (6), conduite d'air, qui présente un corps (7) et une isolation (8) et **en ce qu'**est prévue une zone d'étanchéité (4), dans laquelle sont disposés des éléments d'étanchéité (5) et dans laquelle le corps (2) est formé avec une paroi plus mince de façon à y créer un renfoncement, dans lequel sont disposés les éléments d'étanchéité (5).

2. Pièce de jonction pour le système d'air conditionné suivant la revendication 1, **caractérisée en ce que** la couche d'isolation (3) est formée par une feuille d'isolation enroulée autour du corps (2) de la pièce de jonction.

3. Pièce de jonction pour le système d'air conditionné suivant la revendication 2, **caractérisée en ce que** la couche d'isolation est formée autour du corps (2) par thermoformage.

4. Pièce de jonction pour le système d'air conditionné suivant la revendication 3, **caractérisée en ce que** la couche d'isolation (3) est fixée au corps (2) en la chauffant.

5. Pièce de jonction pour le système d'air conditionné suivant une quelconque des revendications 1 à 3, **caractérisée en ce que** la couche d'isolation (3) est fixée au corps (2) par collage.

6. Pièce de jonction pour le système d'air conditionné suivant une quelconque des revendications précédentes, **caractérisée en ce que** les éléments d'étanchéité sont des lèvres d'étanchéité qui font saillie dans la direction radiale.

7. Pièce de jonction pour le système d'air conditionné suivant une quelconque des revendications précédentes, **caractérisée en ce que** les éléments d'étanchéité sont conçus de façon à former une structure intégrante avec le corps (2).

8. Pièce de jonction pour le système d'air conditionné suivant une quelconque des revendications précédentes, **caractérisée en ce qu'**à l'extérieur de l'espace (9), une rainure est prévue pour une bague de serrage (11) sur la face externe de la couche d'isolation (3).

9. Pièce de jonction pour le système d'air conditionné suivant une quelconque des revendications précédentes, **caractérisée en ce que** dans la pièce de jonction (1) un marquage s'y rapportant est prévu et **en ce que** ledit marquage est disposé sur la face externe de la couche d'isolation (3).
